# EUROPÄISCHE PATENTSCHRIFT

(11) **EP 1 163 945 B1**
(45) Veröffentlichungstag und Bekanntmachung des Hinweises auf die Patenterteilung: **29.04.2009**
(21) Anmeldenummer: 01114183.5
(22) Anmeldetag: 12.06.2001
(51) Int. Cl.: B01D 46/52, B01D 46/24, B01D 29/21

(54) **Zylindrische Filterpatrone mit Stützrohr**
Cylindrical filter cartridge with supporting tube
Cartouche de filtre cylindrique avec tube de support

(30) Priorität: 17.06.2000 DE 10030037
(43) Veröffentlichungstag der Anmeldung: 19.12.2001
(73) Patentinhaber: Mann + Hummel GmbH, 71638 Ludwigsburg (DE)
(72) Erfinder: Luka, Helmut, 71672 Marbach (DE); Gottwald-Grill, Renate, 74321 Bietigheim-Bissingen (DE)
(74) Vertreter: Voth, Gerhard

(56) Entgegenhaltungen:
- EP-A- 0 685 251
- WO-A-89/01818
- DE-A- 19 631 278
- DE-A- 19 829 989
- US-A- 5 547 480

## Beschreibung

### Stand der Technik

Die Erfindung betrifft eine Filterpatrone mit einem ringförmig geschlossenen Filtermedium, dessen Stirnseiten mit Endscheiben versehen sind und welches ein Stützrohr aufweist, nach der Gattung des Patentanspruches 1. Außerdem betrifft die Erfindung einen Filter, in den die genannte Filterpatrone eingebaut ist, nach der Gattung des Patentanspruches 7.

Filterpatronen der eingangs beschriebenen Art sind bekannt. Diese werden z. B. für die Filterung von Schmieröl in einer Brennkraftmaschine verwendet. Aus der EP 0 685 251 ist ein Ringfilterelement für eine radiale Durchströmung bekannt. Dieses Element besteht aus einem ringförmig angeordneten Filtermaterial mit wenigstens einer auf der Stirnseite durch Ultraschallverschweißen dicht aufgebrachten Vliesabdeckung aus thermoplastischem Material. Ein weiteres Beispiel für eine solche Patrone ist in der WO 98/05 403 offenbart Die Patrone hat eine kreiszylindrische Geometrie, wobei das Stützrohr zweiteilig ausgeführt ist und von beiden stirnseitigen Enden der Patrone in den durch das Filterpapier gebildeten Innenraum hineingeschoben und verschnappt werden. Wird die Patrone in ein Filtergehäuse eingebaut, so findet eine Abdichtung zwischen Roh- und Reinseite über Dichtringe statt, welche im Stützrohr angeordnet sind.

Die beiden Teile des Stützrohres werden über eine Schnappverbindung miteinander verrastet. Diese Bauform setzt jedoch voraus, dass in einem ersten Schritt die Filterpatrone hergestellt wird und das Stützrohr in einem zweiten Schritt eingesetzt wird. Außerdem muss das Stützrohr aufgrund von Absätzen, die am Ende der beiden Stützrohrhälften angebracht sind, immer zweiteilig ausgeführt sein, da die Filterpatrone zwischen den genannten Absätzen montiert werden muss. Die Dichtung der montierten Patrone am Stützrohr kommt dann durch die Eigenelastizität der Endscheiben zustande, welche direkt auf dem Außenmantel des Stützrohrs aufliegen. Die Endscheiben sind bevorzugt aus einer Folie aus Nitrilkautschuk gefertigt, die zur Bildung der Filterpatrone warm ausgehärtet wird.

Aufgabe der Erfindung ist es, eine Filterpatrone mit ringförmig geschlossenem Filtermedium und Endscheiben an deren Stirnseiten zu schaffen, welche mit einem im Innenraum angebrachten Stützrohr einen einfach und kostengünstig zu fertigenden Verband bildet. Diese Aufgabe wird durch die Merkmale des Patentanspruches 1 sowie 9 gelöst.

### Vorteile der Erfindung

In die erfindungsgemäße Filterpatrone ist das Stützrohr derart eingebracht, dass dessen Endbereiche dichtend mit den Endscheiben an den Stirnseiten der Filterpatrone verbunden sind. Die Dichtung kann z. B. durch ein leichtes Übermaß des Stützrohrs im Verhältnis zum Innendurchmesser der Endscheiben gewährleistet sein, wobei das montierte Stützrohr die elastisch ausgeführten Endscheiben leicht aufweitet, wodurch die Dichtwirkung zustande kommt.

Weiterhin ist im Stützrohr zumindest auf einer Seite ein Dichtring angebracht, dessen Dichtwirkung sich ausgehend von der Innenwand des Stützrohres radial nach innen entfaltet. Selbstverständlich können zusätzliche axiale Dichteffekte des Dichtrings genutzt werden.

Das Stützrohr ist einteilig ausgeführt. Hierdurch kann die Montage des Stützrohres in der Patrone vereinfacht werden, da weniger Teile zu handhaben sind. Außerdem lässt sich Material einsparen, weil keine Schnappverbindung zur Fixierung des Stützrohres in der Patrone notwendig ist. Dadurch wird die Montage auch sicherer, weil nicht auf ein Einrasten der Schnappverbindung geachtet werden muss. Um das einteilige Stützrohr in die Patrone einschieben zu können, muss dessen Außendurchmesser entsprechend bemessen sein. Dies bedeutet, dass zumindest ein Endbereich des Stützrohres derart bemessen sein muss, dass es durch die Öffnung in der Endscheibe passt, also der Außendurchmesser dieses Endbereiches kleiner, gleich oder mit einem Übermaß gegenüber der Öffnung in der Endscheibe ausgeführt sein muss, wobei das Übermaß unterhalb der elastischen Dehngrenze der Endscheibe liegen muss. Das Filtermedium muss ringförmig geschlossen sein, um einen Innenraum für das Stützrohr zu bilden. Es kann als gefaltetes Filterpapier oder auch als gewickeltes oder gefaltetes Vlies oder auch als poröses Material ausgeführt sein. Dabei muss das ringförmige Filtermedium keine kreiszylindrische Form aufweisen. Denkbar sind auch andere Querschnitte, z. B. ein elliptischer Querschnitt. Derartige Gestaltungen können Vorteile hinsichtlich der Einbaumaße des Filters bewirken.

Die Erfindung sieht vor, dass die Endbereiche des Stützrohrs durch elastische Zungen gebildet werden, deren Enden in die elastisch ausgeführte Endscheibe eingegossen werden. Auf diese Weise lässt sich an diesem Patronenende der Dichtring einsparen, da der Verband zwischen Endscheibe und Stützrohr elastisch genug ist, dass die Endscheibe direkt zur Abdichtung zwischen Roh- und Reinseite des Filters herangezogen werden kann.

Eine Ausgestaltung der Erfindung sieht vor, dass der Dichtring derart im Inneren des Stützrohres angebracht ist, dass dieser die Endscheibe der Filterpatrone nicht berührt. Hierdurch lassen sich die Dichtungsaufgaben zwischen Stützrohr und Gehäuse sowie zwischen Stützrohr und Endscheiben vereinzeln, wodurch eine zuverlässigere Dichtung erreicht werden kann.

Gemäß einer weiteren Ausgestaltung der Erfindung ist auch der Dichtring mit dem Stützrohr vergossen. Der Dichtring kann z. B. aus Nadelfilz hergestellt sein und vor dem Spritzgießen des Stützrohres in die Form gelegt werden. Auf diese Weise entsteht ein zuverlässiger Verband zwischen Stützrohr und Dichtring. Der Dichtring kann auch aus einem Elastomer gefertigt sein. Eine alternative Befestigungsmethode ist das Verkleben des Dichtringes bzw. das Einbringen eines Dichtringes mit Übermaß in die entsprechende Aufnahme am Stützrohr. Das Übermaß sollte so bemessen sein, dass eine zuverlässige Befestigung des Dichtringes im Stützrohr möglich ist.

Werden die Endbereiche des Stützrohrs z. B. durch Eingießen in die Endscheibe eingebettet, so kann durch eine geeignete Geometrie der Dichtring auch durch einen Formschluss gehalten werden, der durch den Innenrand der Endscheibe gebildet wird. Bei der Herstellung der Filterpatrone kann der Dichtring dann locker eingelegt werden, wobei die Fixierung durch Eingießen des Stützrohres in die Endscheibe erfolgt.

Es ist vorteilhaft, die Endscheiben aus einer warm aushärtbaren Folie aus Nitrilkautschuk herzustellen. Dieses Material hat sich im Einsatz für Endscheiben von Filterelementen bewährt. Die Stirnseiten des Filtermediums werden mit den Folien versehen und erwärmt. Dabei dehnen sich die Endscheiben aus, wodurch die Stirnseiten des Filtermediums abgedichtet werden. Nach der Aushärtung des Nitrilkautschuks weist dieser eine genügende Restelastizität auf, um die gewünschte Dichtwirkung im Innendurchmesser zu gewährleisten.

Gemäß einer weiteren Ausgestaltung der Erfindung weist das Stützrohr ausgehend von einem Endbereich einen geschlossenen Bereich auf. Auf diese Weise kann Einfluss auf das Filtrationsverhalten der Filterpatrone genommen werden. Durch das einteilig ausgeführte Stützrohr kann der geschlossene Bereich bis weit an den gegenüber liegenden Endbereich heran geführt werden, da eine Schnappverbindung im Inneren des Stützrohres nicht notwendig ist.

Zu einer besseren Fixierung des Dichtringes im Stützrohr kann vorteilhafterweise zusätzlich ein Absatz vorgesehen werden. Dadurch erhält der Dichtring im übrigen auch einen definierten Einbauort.

Ein Filter, in dem die erfindungsgemäße Filterpatrone verwendet wird, ist ebenfalls unter Schutz gestellt.

Diese und weitere Merkmale von bevorzugten Weiterbildungen der Erfindung gehen außer aus den Ansprüchen auch aus der Beschreibung und den Zeichnungen hervor.

### Zeichnung

Weitere Einzelheiten der Erfindung werden in den Zeichnungen anhand von schematischen Ausführungsbeispielen beschrieben. Hierbei zeigen
- Figur 1: einen Ölfilter für ein Kraftfahrzeug im Mittelschnitt, in den die erfindungsgemäße Filterpatrone eingebaut ist und
- Figur 2: ein Mittelrohr und ausschnitthaft die Endscheiben der zugehörigen Filterpatrone im teilweise aufgeschnittenen Zustand, wobei rechts und links zwei unterschiedliche Versionen dargestellt sind.

### Beschreibung der Ausführungsbeispiele

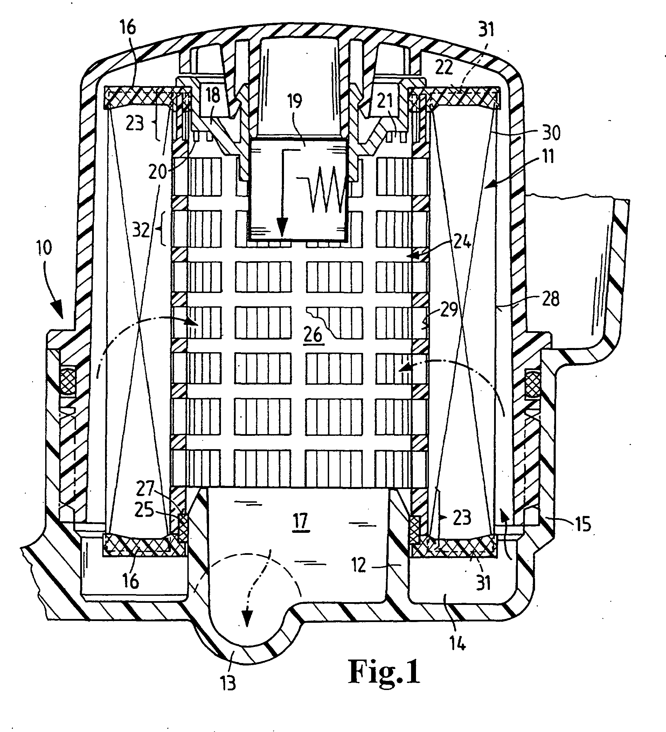

Ein Ölfilter gemäß Figur 1 besteht aus einem Gehäuse 10, in das eine Filterpatrone 11 eingesetzt ist. Mit der einen Seite wird sie auf einen Rohrstutzen 12 aufgeschoben, der mit einem Auslass 13 verbunden ist. Ein Einlass 14 ist in einem Gehäusesockel 15 integriert. Eine Endscheibe 16 der Filterpatrone 11, die mit dem Rohrstutzen 12 in Verbindung steht, bildet einen Durchtritt 17 zum Auslass 13. In die andere Endscheibe 16 ist ein Ventilträger 18 mit einem Umgehungsventil 19 (schematisch dargestellt) eingesetzt. Bei dem Einsetzen des Ventilträgers 18 in die Endscheibe 16 weitet sich diese etwas auf, wodurch eine Dichtung zwischen diesen Bauteilen zustande kommt. Die hierzu nötige Elastizität des Mittelrohres wird durch Schlitze 20 erreicht, die elastische Zungen 21 voneinander trennen. Die Zungen tauchen mit ihren Enden 22 in die Endscheibe 16 ein.

Die Zungen sind in einem Endbereich 23 eines Stützrohres 24 untergebracht. Der gegenüber liegende Endbereich 23 des Stützrohres ist radial so gut wie nicht elastisch. Dieser taucht ebenfalls in die Endscheibe 16 ein, wodurch diese sich jedoch radial nicht mehr elastisch verformen kann. Daher ist ein Dichtring 25 in einem Innenraum 26 des Stützrohres angeordnet. Dieser findet Halt an einem Absatz 27 und wird durch die Endscheibe 16 fixiert. Der Dichtring 25 stellt eine Dichtung zum Rohrstutzen 12 und damit zwischen einer Rohseite 28 und einer Reinseite 29 des Filters her.

Die Filterpatrone 11 besteht aus einem sternförmig gefalteten Filterpapier 30, dessen Stirnseiten 31 in die Endscheiben 16 eingebettet sind. Das Öl strömt von dem Einlass 14 über das Filterpapier durch Eintrittsöffnungen 32 im Stützrohr in dessen Innenraum 26, der sich an die Reinseite 29 des Filters anschließt, und verlässt den Filter durch den Auslass 13.

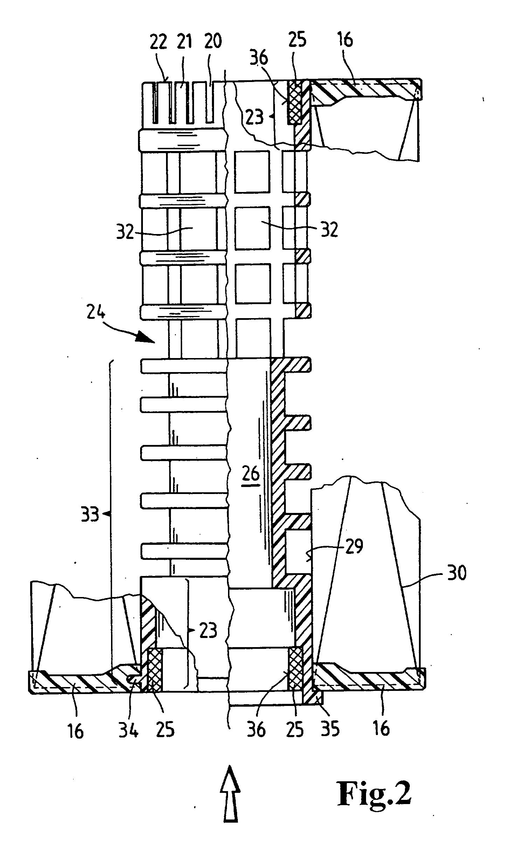

In Figur 2 ist das Stützrohr mit einem Teil der Filterpatrone dargestellt. Die linke Seite des Stützrohrs zeigt eine Version mit den bereits beschriebenen Zungen 21 im oberen Bereich. Dieser Teil ist zur besseren Übersicht ohne eine Endscheibe dargestellt. Im unteren Teil der linken Version des Stützrohres ist ein geschlossener Bereich 33 vorgesehen, der die Reinseite 29 des Filters weitgehend von dem Innenraum 26 des Stützrohres trennt. Im oberen Bereich des Stützrohres sind Eintrittsöffnungen 32 vorgesehen, um eine Verbindung zwischen Reinseite 21 und Innenraum 26 zu gewährleisten. Im unteren Endbereich 23 des Stützrohres ist der Dichtring 25 eingegossen, wobei dieser vollständig von der Endscheibe 16 getrennt ist. Die Verbindung zwischen Endscheibe 16 und Endbereich 23 des Stützrohres wird durch einen Ringabsatz 34 verbessert. Dieser ist von der Endscheibe umschlossen.

Der rechte Teil des Stützrohres 24 stellt eine Version dar, welche in beiden Endbereichen 23 einen Dichtring 25 aufweist. Dieses Stützrohr wird in die Reinseite 29 der Filterpatrone eingeschoben, wobei sich eine Dichtung zwischen den Endscheiben 16 und dem Stützrohr 24 durch eine radiale Aufweitung der Endscheiben ergibt. Auch in diesem Fall ist eine vollständige Trennung von Dichtringen 25 und Endscheiben 16 durch das Stützrohr 24 gegeben. Das Stützrohr weist einseitig einen Axialanschlag 35 auf und muss daher, wie in der Zeichnung durch einen Pfeil dargestellt, von unten eingeschoben werden. Bei der Montage der Filterpatrone im Gehäuse werden Dichtflächen 36 der Dichtring 25 am Einbauort verpresst, so dass eine Dichtung zwischen Roh- und Reinseite des Filters gewährleistet ist.

## Patentansprüche

1. Filterpatrone, aufweisend ein ringförmig geschlossenes, zickzackförmig gefaltetes Filterpapier (30), dessen Stirnseiten (31) dichtend mit Endscheiben (16) versehen sind, und welches ein mit Eintrittsöffnungen (32) versehenes Stützrohr (24) aufweist, welches in Endbereichen (23) dichtend mit den Endscheiben verbunden ist, wobei in mindestens einem der Endbereiche (23) des Stützrohres ein Dichtring (25) mit zumindest einer radial in einen Innenraum (26) des Stützrohres weisenden Dichtfläche (36) angeordnet ist, wobei das Stützrohr (24) einteilig ausgeführt ist und zumindest mit einem der Endbereiche (23) in die angrenzende Endscheibe (16) der Filterpatrone fest verbunden ist, **dadurch gekennzeichnet, dass** das Stützrohr (24) in einem der Endbereiche axial ausgerichtete, durch Schlitze (20) getrennte Zungen (21) aufweist, die in die elastisch ausgeführte Endscheibe (16) zumindest teilweise eingegossen sind.

2. Filterpatrone nach einem der vorherigen Ansprüche, **dadurch gekennzeichnet, dass** der Dichtring (25) im Endbereich des Stützrohres (24) die Endscheibe (16), die mit demselben Endbereich im Eingriff steht, nicht berührt.

3. Filterpatrone nach einem der vorherigen Ansprüche, **dadurch gekennzeichnet, dass** der Dichtring (25) mit dem Stützrohr (24) vergossen ist.

4. Filterpatrone nach einem der vorherigen Ansprüche, **dadurch gekennzeichnet, dass** die Endscheiben aus einer warm aushärtbaren Folie aus Nitrilkautschuk hergestellt sind.

5. Filterpatrone nach einem der vorherigen Ansprüche, **dadurch gekennzeichnet, dass** das Stützrohr (24) zum einen Endbereich (23) hin einen geschlossenen Bereich (33) aufweist, und die Eintrittsöffnungen (32) zum anderen Endbereich (23) hin angeordnet sind.

6. Filterpatrone nach einem der vorherigen Ansprüche, **dadurch gekennzeichnet, dass** der Dichtring (25) im Innenraum (26) des Stützrohres (24) einen Absatz (27) zu dessen Axialabstützung aufweist.

7. Filter mit einem Gehäuse (10), welches einen Einlass (14) und einen Auslass (13) aufweist **dadurch gekennzeichnet, dass** eine Filterpatrone gemäß einem der vorigen Ansprüche eingebaut ist.

## Claims

1. Filter cartridge, featuring a fanfold filter paper (30) closed in a ring-shaped design the front ends (31) of which are sealingly provided with end plates (16) and which features a support tube (24) provided with inlet apertures (32) which is sealingly connected with the end plates in the end areas (23), a gasket (25) with at least one sealing surface (36) pointing radially into an interior area (26) of the support tube being located in at least one of the end areas (23) of the support tube, the support tube (24) being designed as one-piece and firmly connected with at least of the end areas (23) in the adjacent end plate (16) of the filter cartridge, **characterized in that** the support tube (24) features in one of the end areas axially aligned blades (21) separated by slots (20), the blades being at least partially cast-in into the elastic end plate (16).

2. Filter cartridge according to one of the above claims, **characterized in that** the gasket (25) in the end area of the support tube (24) does not contact the end plate (16) which is engaged with the same end area.

3. Filter cartridge according to one of the above claims, **characterized in that** the gasket (25) is sealed with the support tube (24).

4. Filter cartridge according to one of the above claims, **characterized in that** the end plates are made of a thermoset nitrile rubber film.

5. Filter cartridge according to one of the above claims, **characterized in that** the support tube (24) features a closed area (33) towards one end area (23) and that the inlet apertures (32) are arranged towards the other end area (23).

6. Filter cartridge according to one of the above claims, **characterized in that** the gasket (25) features in the internal space (26) of the support tube (24) a protrusion (27) for supporting it axially.

7. Filter with a housing (10) which features an intake (14) and an outlet (13), **characterized in that** a filter cartridge is installed according to one of the above claims.

## Revendications

1. Cartouche filtrante, présentant un papier filtre (30) fermé de façon annulaire et plié en accordéon dont les faces frontales (31) sont pourvues de plaques d'extrémité (16) et forment avec ces disques un assemblage étanche, et doté d'un tube support (24) comportant des orifices d'admission (32) qui est relié de manière étanche avec les plaques d'extrémité dans les zones finales (23), une bague d'étanchéité (25) avec au moins une surface d'étanchéité (36) placée de façon radiale dans un compartiment intérieur adjacent (26) du tube support étant disposée dans au moins une des zones finales (23) du tube support, le tube support (24) étant réalisé en une seule partie et étant relié de façon fixe au moins avec une des zones finales (23) dans la plaque d'extrémité (16) de la cartouche filtrante, **caractérisé en ce que** le tube support (24) présente dans une des zones finales des languettes (21) orientées en sens axial et séparées par des fentes (20), les languettes étant coulées, tout au moins partiellement, dans la plaque d'extrémité (16) réalisé de façon élastique.

2. Cartouche filtrante selon l'une des revendications précédentes, **caractérisée en ce que** la bague d'étanchéité (25) située dans la zone finale du tube support (24) ne touche pas la plaque d'extrémité (16) qui est pris dans la même zone finale.

3. Cartouche filtrante selon l'une des revendications précédentes, **caractérisée en ce que** la bague d'étanchéité (25) est scellée avec le tube support (24).

4. Cartouche filtrante selon l'une des revendications précédentes, **caractérisée en ce que** les plaques d'extrémité sont faits d'un film thermodurcissable en caoutchouc nitrile.

5. Cartouche filtrante selon l'une des revendications précédentes, **caractérisée en ce que** le tube support (24) présente une zone fermée vers une zone finale (23) et que les orifices d'admission (32) sont orientés vers l'autre zone finale (23).

6. Cartouche filtrante selon l'une des revendications précédentes, **caractérisée en ce que** la bague d'étanchéité (25) dans le compartiment intérieur (26) du tube support (24) présente un épaulement (27) qui soutient ce tube en sens axial.

7. Filtre avec un carter (10) qui présente une entrée (14) et une sortie (13), **caractérisé en ce qu'**une cartouche filtrante est montée conformément à l'une des revendications précédentes.
